# EUROPEAN PATENT APPLICATION

(11) **EP 4 614 957 A1**
(43) Date of publication of application: **10.09.2025**
(21) Application number: 25157205.3
(22) Date of filing: 11.02.2025
(51) Int. Cl.: H04N 1/00

(54) **CARTESIAN SCANNER AND METHOD FOR SCANNING USING THE SCANNER**

(30) Priority: 07.03.2024 IT 202400005113
(71) Applicant: Colagrande, Silvia, 00163 Roma (IT); Colagrande, Massimo, 00163 Roma (IT); Colagrande, Lorenzo, 00163 Roma (IT)
(72) Inventor: Colagrande, Silvia, 00163 Roma (IT); Colagrande, Massimo, 00163 Roma (IT); Colagrande, Lorenzo, 00163 Roma (IT)
(74) Representative: Bellomia, Paolo

(57) **Abstract**

Described is a Cartesian scanner (100) comprising a scanning surface (γ) on which an object (O) to be scanned can be positioned and a scanning head (200) comprising an acquisition device (20) configured for acquiring at least one image of the object (O). The scanning head (200) comprises a lighting system comprising at least one light source (2). The scanner (100) comprises a movement system (300) configured for moving the scanning head (200) or the scanning surface (γ) along a scanning direction (X). The scanner (100) comprises a control and processing unit connected to the acquisition device (20) and to the movement system (300). In use, during a movement of the scanning head (200) or of the scanning surface (γ) along the scanning direction (X), the control and processing unit is configured for repeatedly activating the acquisition device (20) in such a way that it acquires, for each activation, an image.

## Description

This invention relates to a Cartesian scanner and a method for scanning an object using the scanner.

The invention is widely used in the field of the acquisition and digitisation of both planar and three-dimensional materials or works (for example wood, marble, stone, fabric, tiles, paintings, industrial decorations, bas-reliefs, tapestries, incisions and the like) even of large and extremely large dimensions.

There are currently prior art flat scanners, known as "Flatbed scanners", wherein the scanning surface is a crystal which must be located in contact with the surface of the object to be scanned. In this situation, the above-mentioned scanners are not suitable either for scanning large-format works or scanning three-dimensional works (such as, for example, bas-reliefs).

Planetary scanners are also known which are equipped with a sensor for images of the matrix type and a standard optical system. These scanners are also not suitable for digitising large-format works since they have an inadequate resolution.

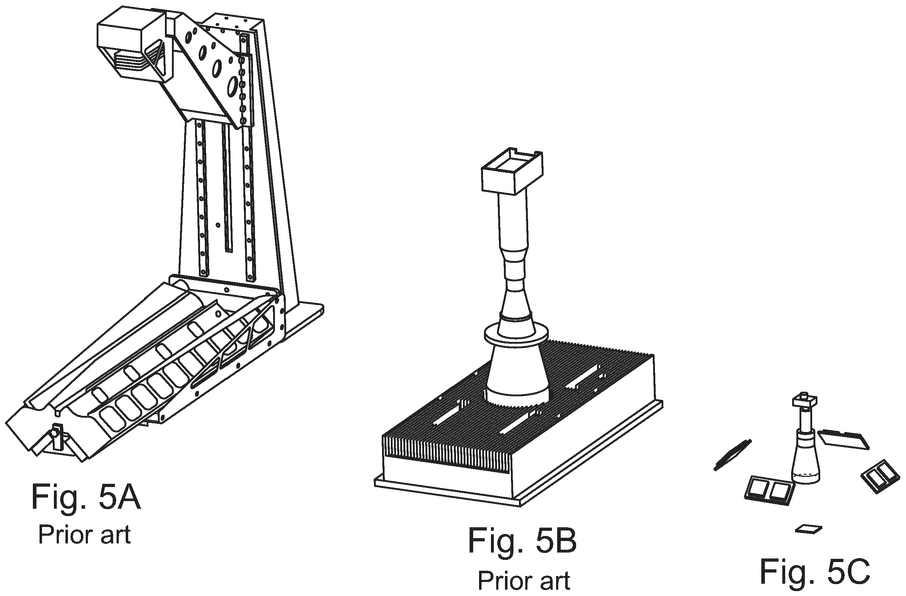

In order to overcome the problems relative to the resolution of the scans of large-format works, there are prior art planetary scanners equipped with a sensor for linear type images and a standard optical system (Figure 5A). Although the linear sensor improves the resolution, in order to guarantee acceptable resolution for works with a particularly large format, the use of particularly large linear sensors is required. These sensors are not readily available and are particularly expensive. A further drawback linked to the planetary scanners equipped with a sensor for linear type images and a standard optical system is linked to the high constructional complexity which results in a bulky, heavy and particularly expensive scanner. In more detail, in the planetary scanners equipped with a sensor for linear images the optical system and the image sensor are separated from the lighting system and not integrated with the latter. Often, the optical system (and the image sensor) and the lighting system are moved separately with additional costs and complexity. Moreover, the dimensions of the lighting system of the above-mentioned scanners as well as the distance between the sensor for images and the scanning surface are proportional to the dimensions of the acquisition area. In this situation, for large-format objects, the dimensions of the lighting system are very large and the image sensor is very far from the scanning surface resulting in an increase in the dimensions, the complexity and the cost of the entire scanner.

In order to overcome the problems relative to the resolution of the scans of large-format works, Cartesian scanners are also known which are equipped with a sensor for linear images and a standard optical system. Although this type of scanner makes it possible to significantly improve the resolution for scanning large-format works, it is not able, if the work to be scanned is not flat, to provide an image wherein the separate portions scanned are perfectly joined together giving rise to optical distortions which cannot be corrected. This problem is overcome by Cartesian scanners equipped with a sensor for linear images and a telecentric optical system (Figure 5B).

Unlike planetary scanners, the acquisition resolution of this type of scanner is not limited by the dimensions of the linear sensor and it is therefore particularly suitable for the digitising of originals of large and extremely large size. Disadvantageously, however, the scanning with this type of scanner is particularly slow and allows a limited depth of field (DOF) to be obtained. Moreover, the use of the linear sensor and the telecentric optical system make the entire scanner particularly complex and costly. More in detail, in order to reduce the number of scans to be performed for digitising large objects and therefore in order to limit the acquisition times, use is made, in the prior art, of large linear sensors which consequently also require a telecentric optical system and a lighting system which are proportional and therefore particularly bulky and heavy with consequent increase in the cost and the complexity of the entire scanner.

The technical purpose of the invention is therefore to provide a Cartesian scanner and a method for scanning an object by means of the scanner which are able to overcome the drawbacks of the prior art.

The aim of the invention is therefore to provide a Cartesian scanner which has an excellent resolution for scanning objects of large and very large size, that is to say, a scanner wherein the resolution and the acquisition format are not limited by the resolution of the sensor for images.

A further aim of the invention is to provide a Cartesian scanner which has limited dimensions.

A further aim of the invention is to provide a Cartesian scanner which is fast in scanning and reliable.

A further aim of the invention is to provide a Cartesian scanner the components of which (and therefore any spare parts such as optical systems and sensors) are readily available on the market.

A further aim of the invention is to provide a Cartesian scanner which has a reduced constructional complexity and, consequently, reduced costs.

A further aim of the invention is to provide a Cartesian scanner which allows the quality and the precision of 3D scans to be improved.

A further aim of the invention is to provide a method for scanning an object using the scanner which is fast, precise and reliable.

The technical purpose indicated and the aims specified are substantially achieved by a Cartesian scanner and a method for scanning an object using the scanner comprising the technical features described in one or more of the accompanying claims. The dependent claims correspond to possible embodiments of the invention.

Further features and advantages of the invention are more apparent in the nonlimiting description which follows of a non-exclusive embodiment of a Cartesian scanner and a method for scanning an object using the scanner.

The description is set out below with reference to the accompanying drawings which are provided solely for purposes of illustration without restricting the scope of the invention and in which:
- Figure 1 shows a perspective view of a scanner according to the invention;
- Figure 2 shows a schematic view of an operation of the scanner according to the invention;
- Figure 3 shows a perspective view of a scanning head of the scanner of Figure 1 from which the covering guard has been removed;

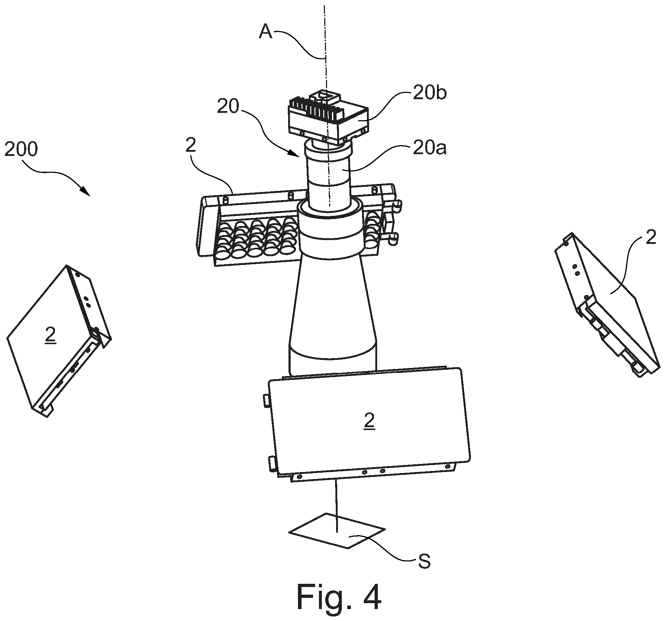

- Figure 4 shows a perspective view of a simplified scanning head;
- Figures 5A and 5B show views of two prior art scanners whilst Figure 5C shows the scanning head of Figure 4.

With reference to the accompanying drawings, the numeral 100 denotes a Cartesian scanner comprising a scanning surface γ on which an object "O" to be scanned can be positioned.

The expression "Cartesian scanner" (also called "scanner of the xy type") is used to mean a scanner wherein the acquisition of images representing the object "O" is performed by scanning different separate portions of the scanning surface γ.

The scanner 100 comprises a scanning head 200 comprising an acquisition device 20 positioned along a vertical optical axis "A" and perpendicular to the scanning surface γ.

Preferably, the acquisition device 20 is configured for acquiring at least one image of the object "O" to be scanned in such a way as to obtain a digital reconstruction of the object "O" which is faithful and complete according to a process which will be described in detail below.

The acquisition device 20 comprises a telecentric optical system 20a.

The telecentric optical system 20a is configured for directing a light beam from the scanning surface γ to the acquisition device 20 in such a way that the light rays are substantially parallel to each other.

The expression "telecentric optical system" is used to mean a system comprising a telecentric lens or a system comprising a lens which, located at a sufficiently large distance from the scanning surface γ, is able to operate as a telecentric lens.

In effect, since the Cartesian scanners typically have a scanning area with reduced dimensions relative to the maximum scanning format possible, by positioning a lens at a sufficiently high distance from the scanning area, it is possible to consider any lens to be able to operate as a telecentric lens.

According to a possible embodiment, the telecentric optical system 20a comprises a telecentric lens with fixed enlargement.

Advantageously, the use of a telecentric lens with fixed enlargement makes it possible to make a scanner 100 which is particularly compact and inexpensive. Alternatively, the telecentric optical system 20a comprises a telecentric lens with variable enlargement.

Advantageously, the use of a telecentric lens with variable enlargement makes it possible to make a scanner 100 which is flexible in terms of optical resolution and depth of field (DOF).

The acquisition device 20 also comprises a matrix sensor 20b for images.

The matrix sensor 20b is a sensor which is able to acquire an image of the object "O" relative to a portion of the object "O" lying below the matrix sensor 20b inside a scanning area "S" of the scanning surface γ.

Preferably, the matrix sensor 20b has a dimension of between 1/3 and 4/3 of an inch.

Even more preferably, the matrix sensor 20b has a size of 2/3 of an inch. Preferably, the matrix sensor 20b has a speed of capture of the images and relative transfer rate of the images which is very high, in particular greater than 1 GigaBit/sec.

Even more preferably, the matrix sensor 20b has a transfer rate of 10 GigaBit/sec, that is to say, a transfer rate approximately 10 times greater than the maximum transfer rate possible with a linear sensor typically used in the prior art planetary or Cartesian systems.

Advantageously, the matrix sensor 20b having the dimensions described above is particularly light and compact.

Advantageously, the matrix sensor 20b having the dimensions described above is readily available on the market at low cost.

Advantageously, the matrix sensor 20b having the dimensions described above allows the use of a particularly light and compact telecentric optical system 20a which is therefore readily available on the market with limited costs as well as the possibility of using Telecentric Zoom optical systems which would otherwise not be available for other types and dimensions of sensors.

Advantageously, the use of the matrix sensor 20b does not require a lighting system with a particularly bulky and heavy arrangement since the sensor has a very reduced area of vision.

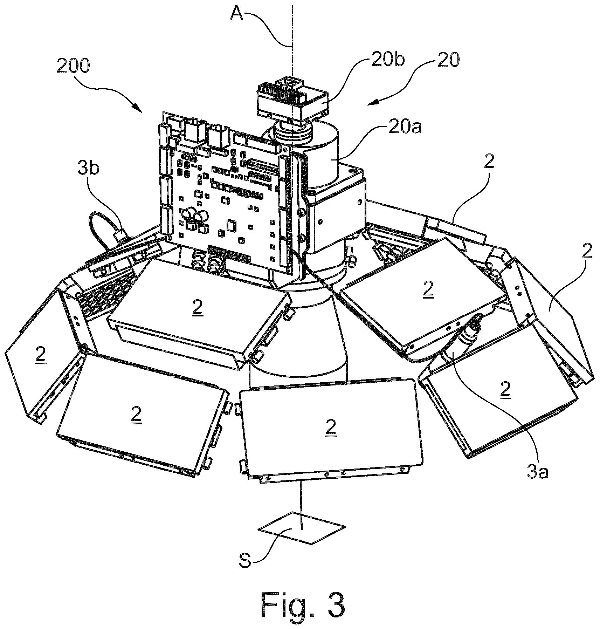

As shown in Figure 3, the telecentric optical system 20a and the matrix sensor 20b are aligned along the vertical optical axis "A" in such a way that the telecentric optical system 20a is interposed between the scanner surface γ and the sensor 20b. In this situation, the telecentric optical system 20a operates in such a way as to direct and "straighten" a beam of light deriving from the scanning surface γ towards the matrix sensor 20b.

The scanning head 200 also comprises a lighting system. In this situation, the lighting system is integral with the telecentric optical system 20a and the matrix sensor 20b, that is to say, it moves with them if the scanning head 200 is moved. The lighting system comprises at least one light source 2 which can be activated to emit a beam of light on the scanning surface γ.

According to a possible embodiment, the at least one light source 2 comprises an array of LED lights.

Preferably, each LED light of the array is equipped with a respective collimator, for example a lens, configured for concentrating and collimating the beam of light on the scanning surface γ.

Advantageously, the collimated light beam allows higher lighting levels to be reached and, consequently, shorter exposure times of the sensor for images and, therefore, higher movement and acquisition speeds.

Alternatively, the at least one light source 2 emits a light which is not collimated, that is to say, diffused.

According to the preferred embodiment, each LED light is a stroboscopic type light, that is to say, a pulsed light.

Advantageously, the use of a pulsed or stroboscopic light allows the heat generated by the lighting system and the electrical power absorbed by the lighting system to be reduced.

Advantageously, the duty cycle of the LED lights according to this invention is typically less than 5%. This is achieved thanks to the use of a stroboscopic light which is synchronous to the exposure of the acquisition device 20. In this situation, the light must not always be switched on but is switched on only selectively during the acquisition time interval of the acquisition device 20. This is also achieved thanks to the use of the matrix sensor since it is possible to switch off the light source 2 for a considerable period of time, for example between one acquisition and the next and whilst the scanning head 200 or the scanning surface γ is moving, as described below.

Advantageously, the duty cycle typically less than 5% of the LED lights makes it possible to considerably reduce the complexity and cost of the lighting system compared with prior art systems based on a linear sensor where the duty cycle is, on the other hand, always 100%.

Advantageously, the duty cycle typically less than 5% of the LED lights allows the LEDs to be powered at 100% of the maximum power recommended by the manufacturer (precisely for stroboscopic light applications) and therefore allows a further increase in the luminous power to be obtained.

Advantageously, the use of a pulsed or stroboscopic light makes it possible to move the scanning head 200 or the scanning surface γ with speeds greater than those normally used without the risk of obtaining moved or blurred images, as described below.

According to a possible embodiment (illustrated), the lighting system comprises a plurality of light sources 2 angularly distributed about the vertical optical axis "A".

Preferably, the light sources 2 of the plurality can be selectively activated to emit a respective beam of light on the scanning surface γ.

Preferably, the number of light sources 2 is greater than two, even more preferably it is greater than three.

Preferably, but not necessarily, the number of light sources 2 is equal to twelve. As shown in the accompanying drawings, the lighting system may also comprise at least a first and a second laser source 3a, 3b positioned symmetrically to each other relative to the vertical optical axis "A".

The first and the second laser sources 3a, 3b are configured to project a line of vision on the scanning surface γ.

Preferably, the first and the second laser sources 3a, 3b are configured to project the line of vision on the scanning area "S" of the matrix sensor 20b.

In this situation, the first and the second laser sources 3a, 3b allow elevation data of the object "O" to be acquired.

In use, in fact, by acquiring, using the acquisition device 20, images of the object "O" alternately illuminated by one or the other laser source 3a, 3b, it is possible to obtain elevation data of the surface of the object "O" by means of a known 3D triangulation technique.

Advantageously, the possibility of using the 3D triangulation technique on scanners such as the one claimed makes it possible to provide a precise measurement of the elevation of the object "O" which is being scanned, rather than only an approximate estimate.

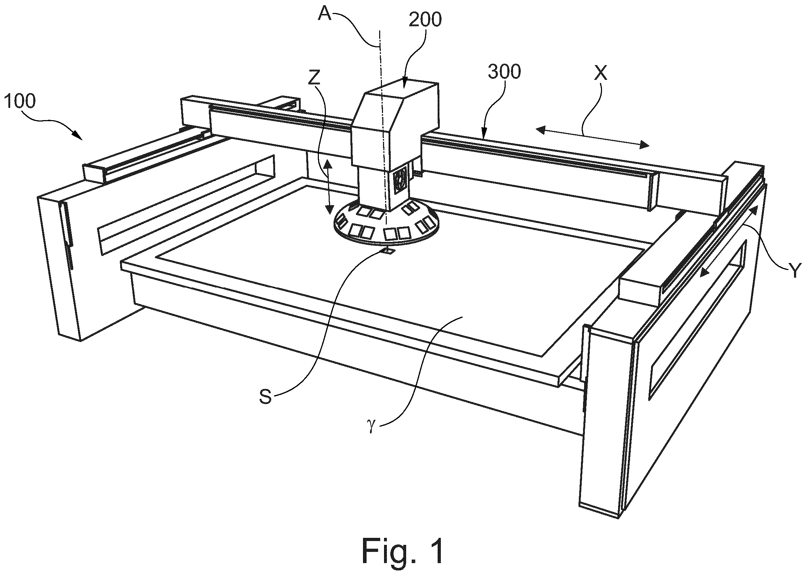

As shown in Figure 1, the scanner 100 also comprises a movement system 300 configured to move the scanning head 200 (and therefore the telecentric optical system 20a, the matrix sensor 20b and the lighting system 300) relative to the scanning surface γ along a scanning direction "X" and along a direction of movement "Y".

The movement system 300 configured for moving the scanning head 200 or the scanning surface γ along the scanning direction "X" and is configured for moving the scanning head 200 or the scanning surface γ along the direction of movement "Y".

The scanning direction "X" and the direction of movement "Y" define respective horizontal Cartesian directions.

Preferably, the movement system 300 is also configured for moving the scanning head 200 relative to the scanning surface γ (or vice versa) along a direction "Z" parallel to the vertical optical axis "A".

In other words, the scanning head 200 may be moved along the direction "Z" parallel to the vertical optical axis "A" to be moved away from or close to the scanning surface γ or it is the scanning surface γ which is moved away from or close to the direction "Z" parallel to the vertical optical axis "A" to the scanning head 200.

In this situation, it is possible to adjust the position of the scanning head 200 and the scanning surface γ depending on the dimensions and/or the type of object "O" to be scanned.

The movement along the direction "Z" parallel to the vertical optical axis "A" is also useful for adjusting the focus position of the telecentric optical system 20a as a function of the thickness of the object "O" to be scanned.

According to the embodiment illustrated, the movement system 300 is equipped with a linear motor configured to move the scanning head along the scanning direction "X" and a pair of linear motors for moving the scanning head 200-along the direction of movement "Y".

Preferably, the movement system 300 also comprises a rack-type device or a worm screw for moving the scanning head 200 or the scanning surface γ along the direction "Z" parallel to the vertical optical axis "A".

The scanner 100 also comprises a control and processing unit connected to the acquisition device 20 and to the movement system 300.

Preferably, but not necessarily, the control and processing unit comprises a PC with software and a card configured to manage the synchronisms for activating the acquisition device 20, of the at least one light source 2 and the like.

The control and processing unit is configured to receive and process data relating to successive scans of the object "O", as described below.

In use, during a movement of the scanning head 200 or of the scanning surface γ by the movement system 300 along the scanning direction "X", the control and processing unit is configured for activating the acquisition device 20 a plurality of times in such a way that the acquisition device 20 acquires, for each activation, an image relative to a separate portion of the object "O".

In other words, whilst the movement system 300 moves the scanning head 200 or the scanning surface γ along the scanning direction "X", the control and processing unit activates several times the acquisition device 20 in such a way that, for each activation, the latter acquires an image representing a portion of the object "O" which is, at that moment, below the acquisition device 20, that is to say, in the scanning area "S".

According to a possible embodiment, the movement system 300 moves the scanning surface γ whilst the scanning head 200 is stationary in such a way that in use, during a movement of the scanning surface γ along the scanning direction "X", the control and processing unit activates the acquisition device 20 a plurality of times in such a way that the acquisition device 20 acquires an image relative to a separate portion of the object "O" for each activation.

In this situation, the scanning surface γ is moved below the scanning head 200 in such a way that the acquisition device 20 acquires a plurality of images representing consecutive portions of the object "O" lying along the trajectory followed by the scanning surface γ.

In use, therefore, during the movement of the scanning surface γ along the scanning direction "X", the acquisition device 20 is activated several times in such a way that, for each activation, it acquires an image. In this situation, during the movement of the scanning surface γ along the scanning direction "X", a plurality of images of a strip of the object "O" is acquired.

The term "strip" means a portion of the object "O" extending parallel to the scanning direction "X" and having a length, measured along the direction of movement "X", equal to the size of the object "O" and a width equal to the scanning area "S" of the matrix sensor 20b.

At the end of this acquisition, the movement system 300 moves the scanning surface γ along the direction of movement "Y" in such a way that, during a subsequent movement of the scanning surface γ along the scanning direction "X", the acquisition device 20 scans a strip of the object "O" above (or below) the one just scanned.

The operations for moving the scanning surface γ along the direction of movement "Y" and along the scanning direction "X" and the operation for activating the acquisition device 20 are repeated until the entire object "O" has been scanned.

According to an alternative embodiment, the movement system 300 moves the scanning surface γ along one between the scanning direction "X" and the direction of movement "Y", and moves the scanning head 200 along the other between the scanning direction "X" and the direction of movement "Y" in such a way that in use, during a movement of the scanning surface γ or of the scanning head 200 along the scanning direction X, the control and processing unit activates the acquisition device 20 a plurality of times in such a way that the acquisition device 20 acquires an image relative to a separate portion of the object "O" for each activation.

If, for example, the scanning surface is moved γ along the scanning direction "X" whilst the scanning head 200 is moved along the direction of movement "Y", in use, during the movement of the scanning surface γ along the scanning direction "X", the scanning head 200 is stationary and the acquisition device 20 is activated several times in such a way that, for each activation, it acquires an image.

At the end of this acquisition, the movement system 300 moves the scanning head 200 along the direction of movement "Y" in such a way that, during a subsequent movement of the scanning surface γ along the scanning direction "X", the acquisition device 20 scans a part of the object "O" above (or below) the one just scanned.

The operations for moving the scanning surface γ along the scanning direction "X" and the scanning head 200 along the direction of movement "Y" and the operation for activating the acquisition device 20 are repeated until the entire object "O" has been scanned.

According to the preferred embodiment illustrated, the movement system 300 moves the scanning head 200 whilst the scanning surface γ is stationary in such a way that in use, during a movement of the scanning head 200 along the scanning direction "X", the control and processing unit activates the acquisition device 20 a plurality of times in such a way that the acquisition device 20 acquires an image relative to a separate portion of the object "O" for each activation.

In this situation, the scanning head 200 is moved in such a way that the acquisition device 20 acquires a plurality of images representing consecutive portions of the object "O" lying along the trajectory followed by the scanning head 200.

In use, therefore, during the stroke of the scanning head 200 along the scanning direction "X", the acquisition device 20 is activated several times in such a way that, for each activation, it acquires an image corresponding to a separate portion of the object "O".

Repeating several times the movement of the scanning head 200 along the scanning direction "X", the object "O" is progressively scanned in strips.

As mentioned above, the term "strip" means a portion of the object "O" extending parallel to the scanning direction "X" and having a length, measured along the direction of movement "X", equal to the size of the object "O" and a width equal to the scanning area "S" of the matrix sensor 20b.

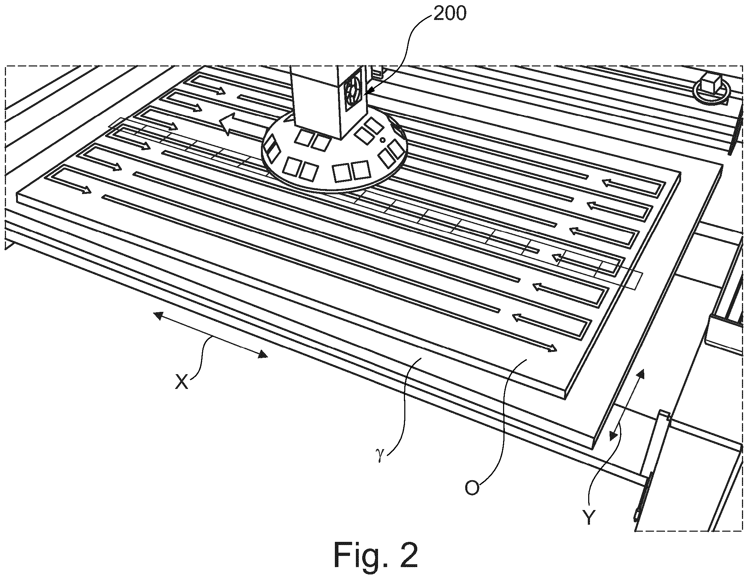

In more detail, according to the preferred embodiment, the movement system 300 moves the scanning head 200 along the scanning direction "X" in such a way that the acquisition device 20 acquires a series of images forming part of a strip of the object "O". At the end of this acquisition, the movement system 300 moves the scanning head 200 along the direction of movement "Y" in such a way that, during a subsequent movement of the scanning head 200 along the scanning direction "X", the acquisition device 20 scans a strip of the object "O" above (or below) the strip just scanned (see the arrows on the scanning surface γ of Figure 2).

Preferably, the strips are at least partly superposed/overlapping on each other.

The operations for moving the scanning head 200 along the direction of movement "Y" and along the scanning direction "X" and the operation for activating the acquisition device 20 are repeated until the entire object "O" has been scanned. In this situation, a series of images is acquired for each scanned strip representing portions of the object "O" in the strip.

Advantageously, the fact of acquiring images relative to portions of the object "O" during the movement of the scanning head 200 or of the scanning surface γ along the scanning direction "X" avoids the problem which is encountered using a matrix sensor 20b of reduced dimensions for scanning a large object "O".

In more detail, since the object "O" is large and the matrix sensor 20b is small, it is necessary to acquire thousands of images in order to scan the object "O".

The acquisition of thousands of images is very time-consuming so it is necessary for the time between an acquisition of one image and the subsequent acquisition to be minimal.

In the static acquisition mode used until now, at the end of an acquisition, the scanning head is moved to reach the subsequent acquisition position (in which it stops and acquires the image) and so on until the complete scanning of the object "O". In this situation, in order to reduce the time between an acquisition of an image and the acquisition of a subsequent image, attempts have been made to speed up the repeated movements (or displacements) of the scanning head. However, this resulted in the creation of strong and repeated mechanical stresses on the entire scanner.

The Applicant, on the other hand, has noted that the fact of acquiring the images whilst the scanning head 200 or the scanning surface γ is moving in a continuous and not intermittent fashion along the scanning direction "X", makes it possible to considerably reduce the acquisition times, speeding up the scanning and, at the same time, reducing the mechanical stresses deriving from the intermittent and repeated movements of the scanning head 200.

In other words, by performing the acquisition of the images whilst the acquisition device 20 or the scanning surface γ is moving (also at high speed), it is possible to reduce the mechanical stress on the scanner 100 and the scanning time.

However, this also results in the management of a considerable quantity of images which are acquired in large quantities in a short time. This problem has been resolved using a sensor for images with a high transfer speed. In other words, an image sensor has been selected which is able to acquire and transfer a considerable quantity of images in a short time.

Moreover, the Applicant has noted that although the images are acquired whilst the acquisition device 20 or the scanning surface γ is moving, the blurred effect in these images may be avoided thanks to the use of one or more stroboscopic light sources 2 according to the embodiment described above combined with the use of a matrix sensor 20b which is particularly high performing.

In other words, the use of a stroboscopic light, and in particular a stroboscopic light collimated in the scanning area "S", combined with the use of a matrix sensor 20b which is particularly high performing, that is to say, a system which is able to acquire photos in a few microseconds, makes it possible to avoid the blurred effect of the images acquired. For example, in order to limit the blurred effect of the images acquired below the threshold of 1 pixel, if it were the scanning head 200 to move along the scanning direction "X" and it were the matrix sensor 20b which travels at the speed, for example, of 1 metre/sec, at an acquisition resolution of 600 PPI (and therefore with a pixel size of 0.0423 mm), it is necessary for the exposure time of the matrix sensor 20b to be less than 42.3 microseconds; the lighting system must therefore be sufficiently powerful to be able to saturate the matrix sensor in only 42.3 microseconds.

Moreover, the Applicant has noticed that the choice of acquiring the images whilst the scanning head 200 or the scanning surface γ is moving rather than whilst they occupy static positions (therefore known positions), has also required the need to measure and/or estimate with a high precision the position of the acquisition device 20 during the acquisitions and this with the aim of allowing a joining without defects of the various images acquired.

In this regard, according to an aspect of the invention, the movement system 300 comprises a linear encoder associated with which ever between the scanning head 200 and the scanning surface γ is movable along said scanning direction "X". The linear encoder is configured to provide, in real time, data representing the position of the scanning head 200 or of the scanning surface γ to the control and processing unit.

Preferably, the linear encoder is a digital incremental magnetic linear encoder. The linear encoder is associated with which ever between the scanning head 200 and the scanning surface γ is movable along the scanning direction "X" to provide, in real time, the exact position along the scanning direction "X". According to the embodiment illustrated, since it is the scanning head 200 to move along the scanning direction "X" (and along the direction of movement "Y"), the encoder is associated with it and provides in real time the position even when the scanning head 200 is also moving at high speed.

The control and processing unit is configured for receiving, in real time, the position data and for sending to said acquisition device 20 an activation command on the basis of the position data.

Preferably, the control and processing unit is configured to receive as input data relative to the number of acquisitions which are to be obtained for each movement of the acquisition head 200 (or of the scanning surface x) along the scanning direction "X".

In other words, it is possible to send to the control and processing unit data representing the number of acquisitions which are to be obtained for each scanned strip of the object "O". In this situation, on the basis of the number of desired acquisitions and on the basis of the position data, the control and processing unit sends activation commands, that is, acquisition commands, to the acquisition device 20 at pre-programmed intervals.

In other words, thanks to the data relative to the position occupied by the scanning head 200 or by the scanning surface γ (depending on which of the two moves along the scanning direction "X") and knowing the number of images which is to be obtained from the scanning of each strip, the control and processing unit is able to start the acquisition of the image by the acquisition device 20 when the scanning head 200 or the scanning surface γ reaches predetermined positions. With reference to the embodiment illustrated, in use, whilst the scanning head 20 is moved along the scanning direction "X" by the movement system 300, the linear encoder sends in real time, moment by moment, the position of the scanning head 200 to the control and processing unit. When the control and processing unit recognises that the scanning head 200 occupies a pre-defined position in which the scanning is to be performed, it sends a command for activating the acquisition to the acquisition device 20. This operation for sending the activation command is repeated, during the movement of the scanning head 200 along the scanning direction "X", for a predetermined number of times in such a way as to obtain, for each acquisition, an image representing the object "O" along the strip just covered by the scanning head 200.

However, since the acquisition device 20 is not able to start acquiring the image immediately, fixed and variable delays between the moment the control and processing unit sends the activation command to the activation device 20 and the actual starting of the acquisition must be considered.

In order to overcome this problem, according to the preferred embodiment, the images acquired are contiguous and at least partly overlapping.

In this way, according to a first possible solution, during a post-production step of the images, the overlapping areas between adjacent images are analysed in such a way that position errors between the various images can be corrected. In this situation, if the acquisition device 20 also does not start the acquisition immediately (that is to say, it does not perform the acquisition whilst it is in the predetermined position for the acquisition) it is possible to estimate, using suitable software algorithms (such as correlated phases, shift detects and the like), the error between the predetermined position and the position actually adopted during the acquisition in such a way as to compensate for it during the above-mentioned post-production step.

According to a second possible solution, on the other hand, after receiving from the control and processing unit the activation command for a new acquisition, the acquisition device 20 signals to the control and processing unit the exact moment in which the acquisition actually starts and/or ends. In this situation, the linear encoder communicates to the control and processing unit the actual position of the acquisition device 20 at the moment of acquisition. In this way, the position data received are used to correct superposing errors between the various images. According to an alternative embodiment, the encoder is not used and the position of the scanning head 200 or of the scanning surface γ (depending on which of the two is movable along the scanning direction "X") is estimated. In this situation, the position data is obtained from an estimate or calculation and, on the basis of the estimated position data, the acquisition of the acquisition device 20 is activated. In this way, the actual position which the scanning head 200 or the scanning surface γ occupies during the acquisition of the image by the acquisition device 20 is also estimated. In this situation, the joining or post-production of the images obtained is also based on the estimated position data.

According to an aspect of the invention, the control and processing unit is configured for sending to the at least one light source 2 a command for switching on or off on the basis of the position data received. In this situation, for each image acquired it is possible to control the switching on or off of the at least one light source 2 in such a way as to create different light schematics.

Preferably, the control and processing unit is in fact configured for receiving, for example by insertion by an operator, data relating to the desired light schematics during each acquisition which is to be performed. In this situation, the control and processing unit, on the basis of the detected position, activates or switches off the at least one light source 2 on the basis of the desired light schematics for that acquisition.

Advantageously, the possibility of controlling the switching on and off of the at least one light source 2 also makes it possible to implement with the scanner 100 according to the invention the Photometric Stereo Technique in which it is necessary to illuminate the object "O" from different directions.

The invention also relates to a method for scanning an object "O" using a Cartesian scanner 100. The method comprises a step of preparing a Cartesian scanner 100 as described above and a step of preparing an object "O" to be scanned on the scanning surface "γ".

The method also comprises a step of moving one between the scanning head 200 and the scanning surface γ along the scanning direction "X".

Simultaneously with the movement step, the method comprises a step of activating the acquisition device 20 in such a way that the acquisition device 20 acquires an image. The activation step is repeated a plurality of times during the same movement step.

In use, once the object "O" which is to be scanned on the scanning surface has been positioned, one between the scanning head 200 and the scanning surface γ is moved along the scanning direction "X". During the movement, the acquisition device 20 is activated several times by the control and processing unit in such a way as to acquire images relative to separate portions of the object "O".

The step of moving along the scanning direction "X" is repeated a plurality of times.

Repeating the movement along the scanning direction "X" several times, the object "O" is progressively scanned in strips.

The term "strip" means a portion of the object "O" extending parallel to the scanning direction "X" and having a length equal to the size of the object "O" measured along the direction of movement "X" and a width equal to the scanning area "S" of the matrix sensor 20b.

Between the end of a movement step and the start of a subsequent movement step, the method comprises a step of moving one between the scanning head 200 and the scanning surface γ along the movement direction "Y".

In use, in effect, at the end of each movement along the scanning direction "X", the scanning head 200 or the scanning surface γ is moved along the direction of movement "Y" in such a way that the acquisition device 20 is positioned below or above the strip just acquired.

Subsequently, the movement along the scanning direction "X" is repeated again in such a way that the acquisition device 20 scans another strip of the object "O". In this situation, as previously occurred, the acquisition device 20 acquires a plurality of images each representing a portion of the object "O" forming part of the strip now covered by the acquisition device 20.

The above-mentioned movement steps by the movement system 300 are repeated in succession until the entire object "O" has been scanned strip by strip.

In other words, the movements along the scanning direction "X" and along the direction of movement "Y" are repeated until the object "O" has been entirely scanned.

According to a possible embodiment of the method, during the movement steps it is the scanning surface γ which moves whilst the scanning head 200 is stationary. According to a further possible embodiment of the method, during the movement steps it is the scanning head 200 which moves and during the movement steps it is the scanning surface γ which is moved.

According to a further possible embodiment of the method, during the movement steps it is the scanning surface γ which moves and during the movement steps it is the scanning head 200 which is moved.

With reference to the embodiment illustrated, on the other hand, during the movement steps it is the scanning head 200 which moves whilst the scanning surface γ is stationary.

With reference to the embodiment illustrated, once the object "O" which is to be scanned on the scanning surface γ is positioned, the latter is stationary whilst it is the scanning head 200 to be moved along the scanning direction "X". During the movement, the acquisition device 20 is activated several times by the control and processing unit in such a way as to acquire images relative to separate portions of the object "O".

Repeating the movement along the scanning direction "X" several times, the object "O" is progressively scanned in strips.

Between the end of a movement step and the start of a subsequent movement step, according to the embodiment illustrated, since the scanning surface γ is stationary the scanning head 200 is moved along the direction of movement "Y".

More in detail, at the end of each movement along the scanning direction "X", the scanning head 200 is moved along the direction of movement "Y" in such a way that the acquisition device 20 is positioned below or above the strip just acquired. Subsequently, the movement of the scanning head 200 along the scanning direction "X" is repeated again in such a way that the acquisition device 20 scans another strip of the object "O".

The steps of moving the scanning head 200 by means of the movement system 300 are repeated in succession until the entire object "O" has been scanned strip by strip.

According to an aspect of the invention, during the movement step, the method comprises a step of sending to the control and processing unit data representing the position on the surface occupied by which ever between the scanning head 200 and the scanning surface γ is movable, in the movement step, along the scanning direction "X". In this situation, the activation step is performed on the basis of the position data.

According to the embodiment illustrated, since it is the scanning head 200 to move along the scanning direction "X", in the sending step, the data representing the position of the scanning head 200 is sent to the control and processing unit.

In this situation, the control and processing unit is configured for receiving the position data and for sending to the acquisition device 20 an activation command on the basis of the position data.

Preferably, the method comprises, before the sending step, a setting step wherein a data item relative to the number of acquisitions which is to be obtained for each movement of the acquisition head 200 or of the scanning surface γ along the scanning direction "X" is sent to the control and processing unit.

In this way, it is possible to send to the control and processing unit a data item representing the number of acquisitions which are to be obtained for each scanned strip of the object "O". In this situation, on the basis of the number of desired acquisitions and on the basis of the position data, the control and processing unit sends activation commands, that is, acquisition commands, to the acquisition device 20 at pre-programmed intervals.

According to the preferred embodiment, the method comprises, at the end of each movement step performed, a processing step wherein the images acquired during the acquisition steps performed in the corresponding movement step are processed to be joined to each other. In this way it is possible to digitally reconstruct in a faithful and precise manner the object "O" just scanned.

More in detail, the digital reconstruction occurs by joining the images acquired on the basis of the position data.

In a step of post-production of the images, the overlapping areas between adjacent images are analysed in such a way as to be able to correct position errors between the various images. In this situation, if the acquisition device 20 has also not started the acquisition immediately (that is to say, it has not performed the acquisition whilst it was in the predetermined position for the acquisition) it is possible to estimate, using suitable software algorithms (such as correlated phases, shift detects and the like), the error between the predetermined position and the position actually adopted during the acquisition in such a way as to compensate for it during the above-mentioned post-production step.

According, on the other hand, to a second possible solution, if the scanner is provided with a linear encoder, after receiving from the control and processing unit the activation command for a new acquisition, the acquisition device 20 signals to the control and processing unit the exact moment in which the acquisition actually starts and/or ends. In this situation, the linear encoder communicates to the control and processing unit the actual position of the acquisition device 20 at the moment of acquisition. In this way, the position data received are used to correct superposing errors between the various images.

The invention achieves the preset aims eliminating the drawbacks of the prior art. The possibility of acquiring images during the movement of the acquisition device 20 makes the scanning of large or extremely large size objects faster without this increasing the mechanical stresses acting on the scanner 100.

The use of a lighting system wherein the light sources 2 are of the stroboscopic type prevents the images acquired by the acquisition device 20 from being blurred.

The possibility of knowing in real time the position of the scanning head 200 makes it possible to speed up the scanning as well as facilitating a subsequent processing or joining of the images acquired.

## Claims

1. A Cartesian scanner (100) comprising:
- a scanning surface (γ) on which an object (O) to be scanned can be positioned;
- a scanning head (200) comprising:
- an acquisition device (20) positioned along a vertical optical axis (A) and perpendicular to said scanning surface (γ), said acquisition device (20) being configured for acquiring at least one image of said object (O) to be scanned, said acquisition device (20) comprising:
a telecentric optical system (20a);
a matrix sensor (20b) for images;
- a lighting system comprising at least one light source (2) which can be activated to emit a beam of light on said scanning surface (γ);
- a movement system (300) configured for moving the scanning head (200) or the scanning surface (γ) along a scanning direction (X) and for moving the scanning head (200) or the scanning surface (γ) along a direction of movement (Y), said scanning and movement directions (X, Y) defining respective horizontal Cartesian directions;
- a control and processing unit, connected to said acquisition device (20) and to said movement system (300), said processing unit being configured for receiving and processing data relative to successive scans of said object (O);
**characterised in that,** in use, during a movement of said scanning head (200) or of said scanning surface (γ) by the movement system (300) along the scanning direction (X), the control and processing unit activates the acquisition device (20) a plurality of times in such a way that the acquisition device (20) acquires an image relative to a separate portion of the object (O) for each activation.

2. The scanner according to claim 1, wherein the movement system (300) moves the scanning head (200) whilst the scanning surface (γ) is stationary in such a way that in use, during a movement of said scanning head (200) along the scanning direction (X), the control and processing unit activates the acquisition device (20) a plurality of times in such a way that the acquisition device (20) acquires an image relative to a separate portion of the object (O) for each activation.

3. The scanner according to claim 1, wherein the movement system (300) moves the scanning surface (γ) whilst the scanning head (200) is stationary in such a way that in use, during a movement of said scanning surface (γ) along the scanning direction (X), the control and processing unit activates the acquisition device (20) a plurality of times in such a way that the acquisition device (20) acquires an image relative to a separate portion of the object (O) for each activation.

4. The scanner according to claim 1, wherein the movement system (300) moves the scanning surface (γ) along one between the scanning direction (X) and the direction of movement (Y), and moves the scanning head (200) along the other between the scanning direction (X) and the direction of movement (Y) in such a way that in use, during a movement of said scanning surface (γ) or of said scanning head (200) along the scanning direction (X), the control and processing unit activates the acquisition device (20) a plurality of times in such a way that the acquisition device (20) acquires an image relative to a separate portion of the object (O) for each activation.

5. The scanner according to any one of the preceding claims, wherein the images acquired are contiguous and at least partly overlapping.

6. The scanner according to any one of the preceding claims, wherein said movement system (300) comprises a linear encoder associated with which ever between the scanning head (200) and said scanning surface (γ) is movable along said scanning direction (X), said linear encoder being configured to provide, in real time, data representing the position of said scanning head (200) or said scanning surface (γ) to said control and processing unit, preferably said linear encoder being a digital incremental magnetic linear encoder.

7. The scanner according to claim 6, wherein the control and processing unit is configured for receiving, in real time, said position data and for sending to said acquisition device (20) an activation command on the basis of said position data.

8. The scanner according to claim 6 or 7, wherein the control and processing unit is configured for sending to the at least one light source (2) a command for switching on or off on the basis of said position data.

9. The scanner according to any one of the preceding claims, wherein said at least one light source (2) comprises an array of LED lights, preferably, each LED light being provided with a respective collimator configured to collimate the beam of light emitted by the light source (2) on the scanning surface (γ).

10. The scanner according to claim 9, wherein each LED light is a stroboscopic type light.

11. The scanner according to any one of the preceding claims, wherein said lighting system comprises a plurality of light sources (2) angularly distributed around said vertical optical axis (A) and which can be activated, preferably selectively, for emitting a beam of light on said scanning surface (γ).

12. The scanner according to any one of the preceding claims, wherein said telecentric optical system (20a) comprises alternatively a telecentric lens with fixed enlargement or a telecentric lens with variable enlargement.

13. The scanner according to any one of the preceding claims, wherein said lighting system comprises at least a first and a second laser source (3a, 3b) positioned symmetrically to each other relative to said vertical optical axis (A), the first and the second laser source (3a, 3b) being configured to project a line of vision on the scanning surface (γ), preferably on a scanning area (S) of the matrix sensor (20b).

14. The scanner according to any one of the preceding claims, wherein said movement system (300) is also configured for moving the scanning head (200) relative to the scanning surface (γ) or vice versa along a direction (Z) parallel to said vertical optical axis (A).

15. A method for scanning an object (O) using a Cartesian scanner (100) comprising the steps of:
- preparing a Cartesian scanner (100) according to any one of the preceding claims;
- preparing an object (O) to be scanned on said scanning surface (γ);
- moving one between said scanning head (200) and said scanning surface (γ) along the scanning direction (X);
- simultaneously with the movement step, the method comprises a step of activating the acquisition device (20) in such a way that the acquisition device (20) acquires an image;
said activation step being repeated a plurality of times during the same movement step.

16. The method according to claim 15, wherein said step of moving along the scanning direction (X) is repeated a plurality of times and wherein, between the end of a movement step and the start of a subsequent movement step, the method comprises a step of moving one between said scanning head (200) and said scanning surface (γ) along the movement direction (Y).

17. The method according to claim 15 or 16, comprising, during said movement step, a step of sending to the control and processing unit a data item representing the position on the surface occupied by which ever between the scanning head (200) and the scanning surface (γ) is movable, in said movement step, along said scanning direction (X), and wherein said activation step is performed on the basis of said position data.

18. The method according to any one of claims 15 to 17, wherein the method comprises, at the end of the movement step, a processing step wherein the images acquired during the acquisition steps performed in said movement step are processed for being joined to each other at least on the basis of the position data.
